# EUROPEAN PATENT APPLICATION

(11) **EP 2 094 060 A2**
(43) Date of publication of application: **26.08.2009**
(21) Application number: 08164406.4
(22) Date of filing: 16.09.2008
(51) Int. Cl.: H05B 6/12

(54) **Electric range and induction coil unit used therein**

(30) Priority: 25.02.2008 KR 20080016694
(71) Applicant: Samsung Electronics Co., Ltd., Suwon-si, Gyeonggi-Do (KR)
(72) Inventor: Lee, Sung Ho, Gyeonggi-do (KR); Hong, Seok Weon, Suji-eup, Yongin-si, Gyeonggi-do (KR); Jang, Seong Deog, Paldal-gu, Suwon-si, Gyeonggi-do (KR); Kim, Dae Rae, Hwaseong-si, Gyeonggi-do (KR); Lee, Se Min, Suwon-si, Gyeonggi-do (KR)
(74) Representative: Grünecker, Kinkeldey, Stockmair & Schwanhäusser Anwaltssozietät

(57) **Abstract**

Disclosed are an electric range and an induction coil unit used therein. The electric range includes a plate, on which cooking containers are mounted; an induction coil unit provided under the plate, and including a plurality of induction coils; and a control unit to control the operation of the induction coil unit, wherein at least one of the induction coils includes at least one rectilinear part.

## Description

### BACKGROUND

### 1. Field

The present invention relates to an electric range and an induction coil unit used therein, and more particularly, to an electric range, which is effectively used under various conditions regardless of size and shape of a cooking container, and an induction coil unit used therein.

### 2. Description of the Related Art

In general, an induction heating coil is used as a heating unit of electric ranges including an electric oven. The induction heating coil allows food to be cooked using joule heat due to an eddy current loss and heat due to a hysteresis loss generated from a cooking container laid on an AC magnetic field.

An electric range using an induction heating coil emits heat using electricity so as not to consume oxygen and generate noxious gas, and uses a plate made of tempered glass to improve appearance. Further, unlike a range using gas, such an electric range has a flat upper surface, and thus serves as a built-in type range. Therefore, the induction heating coil is generally used as a heating unit applied to electric ranges.

An electric range using an induction heating coil, disclosed in Korean Patent Application No. 2006-0089361, includes a plate, an induction coil unit, and a control unit.

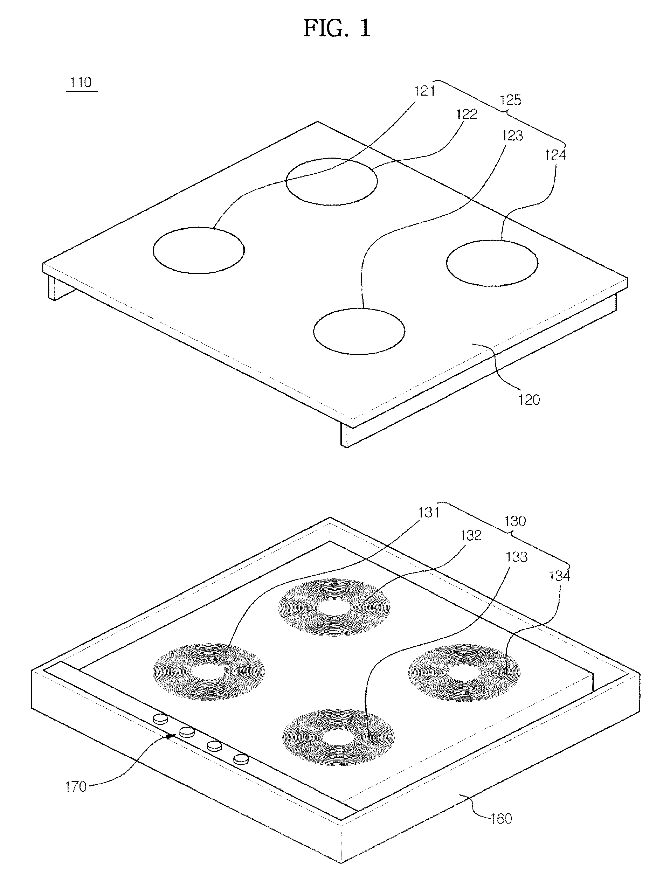

Hereinafter, with reference to FIG. 1, a conventional electric range will be concretely described.

A conventional electric range 110 includes a plate 120 provided on the upper surface of a base 160, and an induction coil unit 130 provided under the plate 120.

The plate 120 is made of tempered glass, and forms the upper surface of the electric range 110. Indication lines 125 showing a seating position of a cooking container (not shown) are provided on the plate 120.

The induction coil unit 130 is provided within the base 160 under the plate 120. The induction coil unit 130 is formed by winding coils in a circle. The induction coil unit 130 includes first, second, third, and fourth induction coils 131, 132, 133, and 134 to correspond to first, second, third, and fourth indication lines 121, 122, 123, and 124.

A user operates a desired induction coil of the induction coil unit 130 through manipulation of an operation unit 170. That is, in the case that food is cooked through the first induction coil 131, the user first puts a cooking container (not shown) on the first indication line 121. Then, the user operates the first induction coil 131 corresponding to the first indication line 121 through manipulation of the operation unit 170. When the first induction coil 131 is operated, current is applied to the first induction coil 131, and generates an AC magnetic field. The AC magnetic field acts on the cooking container (not shown), and thus generates joule heat due to an eddy current loss and heat due to a hysteresis loss.

Cooking with the induction coil unit 130 is not achieved by the direct heating of the induction coil unit 130, but is achieved by the eddy current loss and the hysteresis loss due to the interaction between the induction coil unit 130 and the cooking container (not shown), as described above. Thus, cooking is smoothly achieved only when the cooking container (not shown) is put correctly on a desired indication line. In the case that the cooking container (not shown) is deviated from the indication line, the AC magnetic field generated from the induction coil unit 130 located below the indication line cannot act on the cooking container (not shown), and cooking is not achieved.

The conventional electric range includes the circular induction coils, which are respectively operated, thus being incapable of accepting cooking containers having various sizes and shapes. In order to solve this problem, an electric range, in which at least two induction coils are concurrently operated, has been proposed. However, such an electric range includes the circular induction coils generating a heating action, and thus inevitably generates a space, in which the heating action is not affected, even though the distance between the induction coils is narrowed, thereby lengthening a cooking time and drastically lowering the efficiency of the induction coils.

### SUMMARY

Therefore, one aspect of the invention is to provide an electric range, which is effectively used under various conditions regardless of size and shape of a cooking container, and an induction coil unit used therein.

Additional aspects and/or advantages will be set forth in part in the description which follows and, in part, will be apparent from the description, or may be learned by practice of the invention.

The foregoing and/or other aspects, are achieved by providing an electric range to receive cooking containers; the electric range comprising a plate, on which the cooking containers are mounted; an induction coil unit provided under the plate, and including a plurality of induction coils; and a control unit to control an operation of the induction coil unit, wherein at least one of the induction coils includes at least one rectilinear part.

At least two of the induction coils include at least one rectilinear part, and the at least two of the induction coils having the rectilinear parts are disposed such that the respective rectilinear parts are adjacent to each other.

At least one of the induction coils including the at least one rectilinear part further includes an arched part.

At least one of the induction coils having the arched part include the at least one rectilinear part at one side thereof and the arched part connecting both ends of the at least one rectilinear part at another side thereof.

At least one of the induction coils including the at least one rectilinear part has a rectangular shape having four of the rectilinear parts.

The control unit may concurrently operates a plurality of the induction coils are adjacent to one another.

The plate includes a plurality of main indication lines guiding the cooking containers such that the cooking containers are respectively located on circular ones of the induction coils; and a plurality of subsidiary indication lines guiding the cooking containers such that the cooking containers are located on the induction coil having the rectilinear part.

In accordance with another aspect, the present invention provides an induction coil unit comprising a plurality of induction coils, wherein at least one of the induction coils includes at least one rectilinear part.

At least two of the induction coils include at least one rectilinear part, and the at least two of the coils are disposed such that the rectilinear parts are adjacent to each other.

At least one of the induction coils including the at least one rectilinear part further includes an arched part.

At least one of the induction coils having the arched part further includes the at least one rectilinear part at one side thereof and the arched part connecting both ends of the at least one rectilinear part at another side thereof.

At least one of the induction coils including the at least one rectilinear part may have a rectangular shape having four rectilinear parts.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is an exploded perspective view of a conventional electric range;
FIG. 2 is an exploded perspective view of an electric range in accordance with a first embodiment of the present invention;
FIG. 3 is a view of the electric range of FIG. 2 in a state of use;
FIG. 4 is an exploded perspective view of an electric range in accordance with a second embodiment of the present invention; and
FIG. 5 is an exploded perspective view of an electric range in accordance with a third embodiment of the present invention.

### DETAILED DESCRIPTION OF EMBODIMENTS

Reference will now be made in detail to the embodiments of the present invention, examples of which are illustrated in the accompanying drawings, wherein like reference numerals refer to like elements throughout. The embodiments are described below to explain the present invention by referring to the figures.

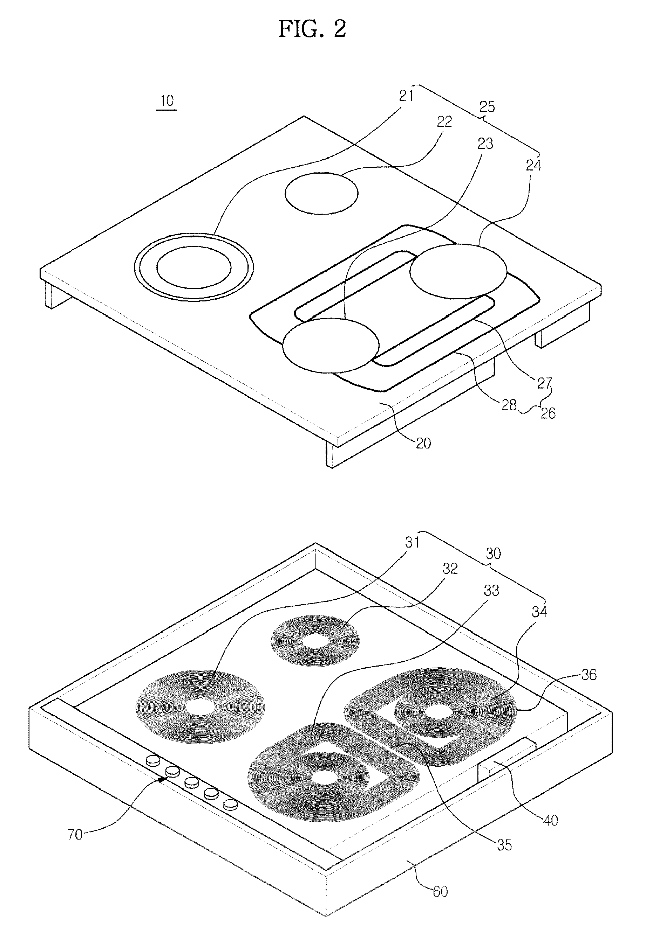

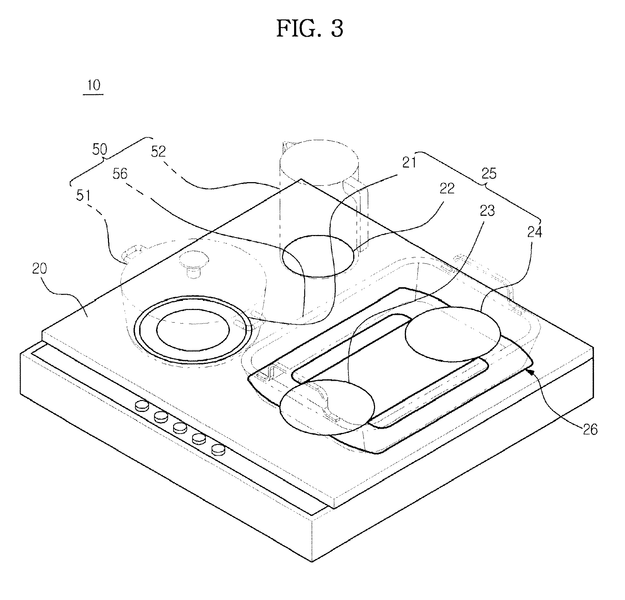

FIG. 2 is an exploded perspective view of an electric range in accordance with a first embodiment of the present invention, and FIG. 3 is a view of the electric range of FIG. 2 in a state of use.

As shown in FIGS. 2 and 3, an electric range 10 in accordance with the first embodiment includes a plate 20, an induction coil unit 30 including first, second, third, and fourth induction coils 31, 32, 33, and 34, and a control unit 40 controlling the operation of the induction coil unit 30.

The plate 20 has a flat shape such that cooking containers 50 can be put on the upper surface of the plate 20. The plate 20 is made of tempered glass, and thus cannot be easily broken or scratched, thereby improving appearance. Since the plate 20 is made of one seamless tempered glass plate, even if food splatters onto the upper surface of the plate 20 during cooking, it is easy to dispose of the splattered food. Main indication lines 25, showing that the induction coils of the induction coil unit 30 are buried thereunder, and subsidiary indication lines 26, intuitively showing that induction coils of the induction coil unit 30, which are concurrently operated, are buried thereunder, are provided on the plate 20.

The main indication lines 25 are circular guide lines provided at four positions on the upper surface of the plate 20. The main indication lines 25 correspond to the positions of the induction coils 31, 32, 33, and 34 of the induction coil unit 30, which are buried under the plate 20. The plate 20 is opaque, and thus it is not easy for a user to confirm the positions of the induction coils 31, 32, 33, and 34 with the naked eye. For this reason, the main indication lines 25 are shown on the upper surface of the plate 20, under which the induction coils 31, 32, 33, and 34 are buried such that the user can intuitively confirm the correct positions, on which the cooking containers 50 will be put. The main indication lines 25 are divided into first, second, third, and fourth main indication lines 21, 22, 23, and 24 corresponding to the respective induction coils 31, 32, 33, and 34 of the induction coil unit 30.

The first, second, third, and fourth main indication lines 21, 22, 23, and 24 have different sizes according to heat capacities of the respective induction coils 31, 32, 33, and 34 of the induction coil unit 30 provided thereunder. That is, the first induction coil 31 corresponding to the first main indication line 21, which is located at the comparatively front area, has a large size, and thus the first main indication line 21 is larger and clearer than the second main indication line 22. Since the first main indication line 21 is larger and clearer than the second main indication line 22, the user intuitively puts a medium-size cooking container 51 on the first main indication line 21, and puts a small-size cooking container 52 on the second main indication line 22. Therefore, the cooking containers 50 are properly used according to the heat capacities of the respective induction coils 31, 32, 33, and 34 of the induction coil unit 30, and thus it is possible to improve cooking efficiency.

The subsidiary indication lines 26 are provided around the third and fourth main indication lines 23 and 24. As described below, the third and fourth main induction coils 33 and 34 can be concurrently operated. In the case that a large-size cooking container 56 is used, it may be impossible to properly cook only with a single induction coil. In this case, the third and fourth induction coils 33 and 34 are concurrently operated so as to achieve rapid cooking. In the case that the third and fourth induction coils 33 and 34 are concurrently operated, the subsidiary indication lines 26 are provided to allow a user to correctly put the large-size cooking container 56 on the third and fourth induction coils 33 and 34. The subsidiary indication lines 26 are formed in the shape of a magnetic field curve centering on the third and fourth main indication lines 23 and 24 at both ends. The subsidiary indication lines 26 are formed along the outlines of the third and fourth induction coils 33 and 34 buried under the plate 20. The subsidiary indication lines 26 include a first subsidiary indication line 27 and a second subsidiary indication line 28.

The first subsidiary indication line 27 and the second subsidiary indication line 28 are the same in that they serve as the subsidiary indication lines 26. However, the first subsidiary indication line 27 has a smaller size than that of the second subsidiary indication line 28. In the case that the large-size cooking container 56 has a slightly small size, a user puts the large-size cooking container 56 along the first subsidiary indication line 27, and in the case that the large-size cooking container 56 has a slightly large size, the user puts the large-size cooking container 56 along the second subsidiary indication line 28, thereby allowing the AC magnetic field generated from the third and fourth induction coils 33 and 34 to be effectively transmitted to the large-size cooking container 56.

The induction coil unit 30 is provided within a base 60 located under the plate 20. When the electric range 10 is operated, AC current is supplied to the induction coil unit 30 and the induction coil unit 30 generates an AC magnetic field. The AC magnetic field reacts with the cooking containers 50, and thus generates joule heat due to an eddy current loss and heat due to a hysteresis loss. The induction coil unit 30 includes the first and second induction coils 31 and 32 having a circular shape and the third and fourth induction coils 33 and 34 having an arch shape.

The first and second induction coils 31 and 32 are coils, which are wound into a circular shape. The first induction coil 31 is located at a position more forward than that of the second induction coil 32, and is larger than the second induction coil 32. Accordingly, since the heat capacity of the first induction coil 31 is larger than that of the second induction coil 32, the user uses the first induction coil 31 when food contained in the medium-size cooking container 51 is cooked.

The third and fourth induction coils 33 and 34 are coils, which are wound into an arch shape. The arch-shaped third and fourth induction coils 33 and 34 are disposed such that rectilinear parts 35 of the third and fourth induction coils 33 and 34, being opposed to arc-shaped parts 36 of the third and fourth induction coils 33 and 34, are adjacent to each other. Therefore, a space between the third and fourth induction coils 33 and 34, in which the third and fourth induction coils 33 and 34 do not exist, is minimized, and thus in the case that the third and fourth induction coils 33 and 34 are concurrently operated, the AC magnetic field can be more effectively transmitted to the large-size cooking container 56 located on the third and fourth induction coils 33 and 34. It is apparent that this point is the effect of only the arch-shaped third and fourth induction coils 33 and 34, in consideration of the inevitable generation of a vacant space around the neighboring arc-shaped parts of the circular first and second induction coils 31 and 32, even if the first and second induction coils 31 and 32 are maximally close to each other, and the difficulty in effectively transmitting the AC magnetic field due to the vacant space around the arc-shaped parts of the first and second induction coils 31 and 32.

The control unit 40 generates a control signal according to the manipulation of an operation unit 70 by a user, so as to operate the induction coil unit 30 or stop the operation of the induction coil unit 30. In the case that the user wants to operate any one of the induction coils 31, 32, 33, and 34 of the induction coil unit 30, the control unit 40 generates a control signal operating only the one of the induction coils 31, 32, 33, and 34, and in the case that the user wants to concurrently operate the third and fourth induction coils 33 and 34, the control unit 40 generates a control signal for concurrently operating the third and fourth induction coils 33 and 34.

Hereinafter, the operation of the above electric range in accordance with the first embodiment will be described.

The cooking containers 50 having various sizes and shapes are used according to an amount and kind of food to be cooked. The cooking containers 50 include the medium-size cooking container 51, which is generally used, the small-size cooking container 52, which is used to cook a small amount of food, and the large-size cooking container 56, which is used to cook a large amount of food.

When food in the various cooking containers 50 is cooked using the electric range 10, a user uses the induction coil(s) of the induction coil unit 30, which is/are the most proper for the selected one of the cooking containers 50. That is, in the case that the medium-size cooking container 51 is selected, the first induction coil 31 having a medium heat capacity is used, and in the case that the small-size cooking container 52 is selected, the second induction coil 32 having a small heat capacity is used. However, the large-size cooking container 56 requires more than the heat capacity generated from each of the induction coils 31, 32, 33, and 34 of the induction coil unit 30, and thus it is difficult to properly cook food in the large-size cooking container 56 using any one of the induction coils 31, 32, 33, and 34.

In the case that the large-size cooking container 56 is selected, a user manipulates the operation unit 70 such that the control unit 40 generates a control signal to concurrently operate the third and fourth induction coils 33 and 34. When the third and fourth induction coils 33 and 34 are concurrently operated by the control signal of the control unit 40, the heat capacity is increased and it is possible to rapidly cook food contained in the large-size cooking container 56. Further, since the third and fourth induction coils 33 and 34 are formed in an arch shape such that the rectilinear parts 35 of the third and fourth induction coils 33 and 34 are adjacent to each other, the AC magnetic field can act on the whole bottom surface of the large-size cooking container 56.

In order to rapidly and effectively cook food, the third and fourth induction coils 33 and 34 are concurrently operated so as to increase the heat capacity, and the cooking container 50 is located correctly on the upper surface of the induction coil unit 30. However, it is not easy for a user to distinguish the correct positions of the respective induction coils 31, 32, 33, and 34 buried under the opaque plate 20. Accordingly, the user puts the cooking container 50 on the plate 20 such that the cooking container 50 is overlapped with the respective main indication lines 50, thereby allowing the electric range 10 to be operated under the optimum state.

In the case that the large-size cooking container 56 is used, a position, at which the large-size cooking container 56 will be put, is set with reference to the subsidiary indication lines 26 provided at the side of the third and fourth main indication lines 23 and 24. That is, the large-size cooking container 56 is located on the subsidiary indication lines 26, and thus the AC magnetic field generated from the third and fourth induction coils 33 and 34 is effectively transmitted to the large-size cooking container 56.

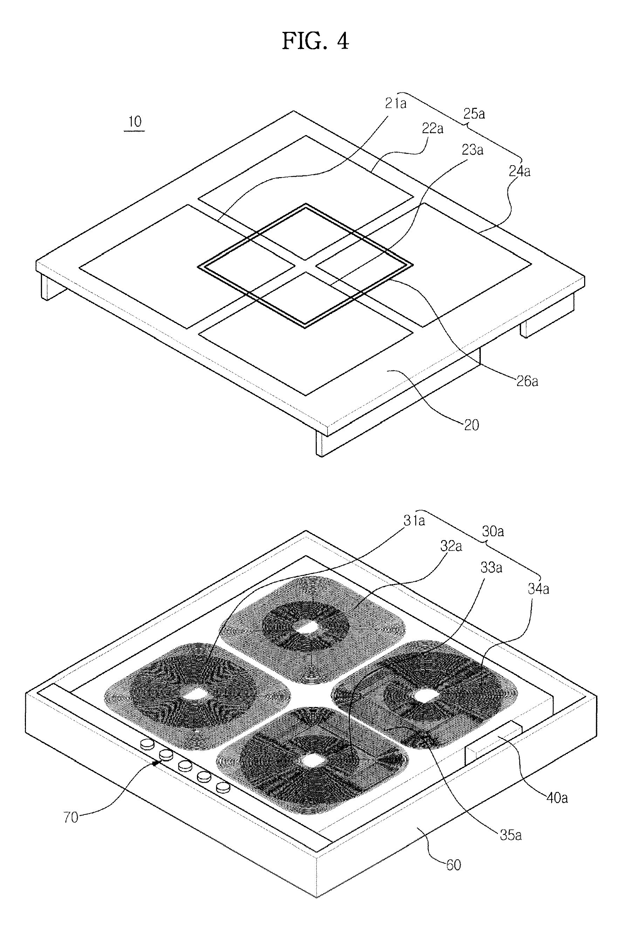

FIG. 4 is an exploded perspective view of an electric range in accordance with a second embodiment of the present invention. Some parts in this embodiment are substantially the same as those in the first embodiment and thus denoted by the same reference numerals even though they are depicted in different drawings. Further, a part of the construction and operation of the second embodiment are substantially the same as those of the first embodiment and a detailed description thereof will thus be omitted because it is considered to be unnecessary. Parts in this embodiment, which are modified from the first embodiment, are denoted by reference numerals with a suffix 'a'.

In an electric range 10 in accordance with the second embodiment, an induction coil unit 30a, main indication lines 25a, having lines 21 a, 22a, 23a and 24a and subsidiary indication lines 26a are formed in a rectangular shape.

The induction coil unit 30a includes first, second, third, and fourth induction coils 31 a, 32a, 33a, and 34a, which have a rectangular shape having four rectilinear parts 35a and are adjacent to one another. A user can use the respective induction coils 31 a, 32a, 33a, and 34a one by one. Further, two induction coils, such as the first and second induction coils 31 a and 32a, the second and third induction coils 32a and 33a, the third and fourth induction coils 33a and 34a, and the fourth and first induction coils 34a and 31a, may be concurrently used, or three induction coils may be concurrently used. Further, the first, second, third, and fourth induction coils 31 a, 32a, 33a, and 34a may be concurrently used under the condition that the large-size cooking container 56 (FIG. 3) is mounted on the plate 20 such that the cooking container 56 can be overlapped with the subsidiary indication lines 26a shown on the center of the plate 20. Since the rectangular induction coils 31 a, 32a, 33a, and 34a of the induction coil unit 30a are adjacent to one another, the AG magnetic field can be transmitted to the whole bottom surface of the large-size cooking container 56 (FIG. 3) to rapidly cook food contained in the large-size cooking container 56.

The main indication lines 25a are provided on the upper surface of the plate 20 such that the user can intuitively recognize the positions of the respective induction coils 31a, 32a, 33a, and 34a of the induction coil unit 30a provided within the base 60, and the subsidiary indication lines 26a intuitively indicating a position, at which the large-size cooking container 56 (FIG. 3) will be put, in the case that all the induction coils 31 a, 32a, 33a, and 34a of the induction coil unit 30a are used.

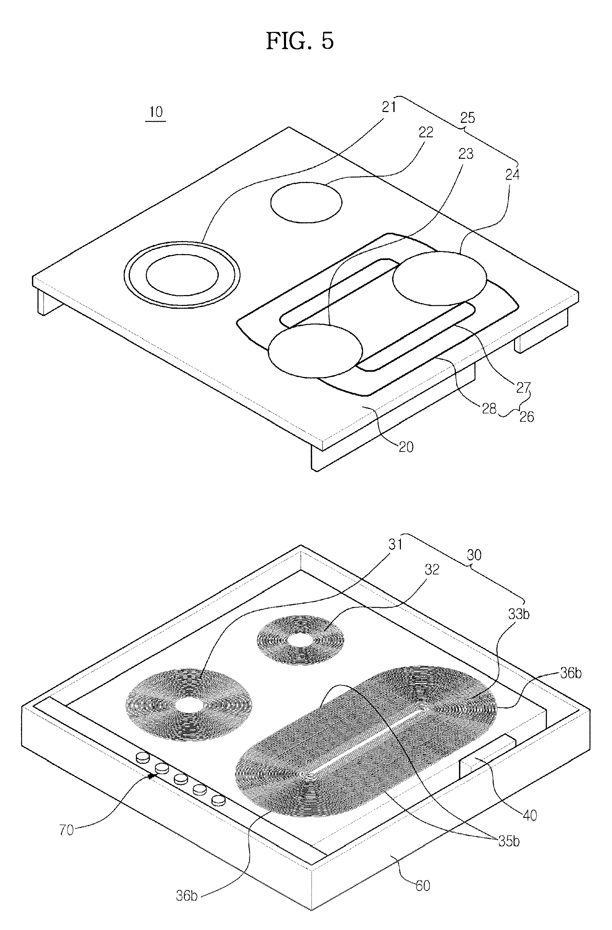

FIG. 5 is an exploded perspective view of an electric range in accordance with a third embodiment of the present invention. Some parts in this embodiment are substantially the same as those in the first embodiment and thus denoted by the same reference numerals even though they are depicted in different drawings. Further, a part of the construction and operation of the second embodiment are substantially the same as those of the first embodiment and a detailed description thereof will thus be omitted because it is considered to be unnecessary. Parts in this embodiment, which are modified from the first embodiment, are denoted by reference numerals with a suffix 'b'.

An electric range 10 in accordance with the third embodiment includes a third induction coil 33b having two rectilinear parts 35b.

The third induction coil 33b includes the two rectilinear parts 35b at both sides, and arc-shaped parts 36b connecting the two rectilinear parts 35b. When a user operates the third induction coil 33b, the AC magnetic field is transmitted to the whole bottom surface of the large-size cooking container 56 (FIG. 3) so as to rapidly cook food contained in the large-size cooking container 56.

Although the above-mentioned embodiments respectively describe an induction coil unit, in which two induction coils among four induction coils have an arch shape, an induction coil unit, in which all four induction coils have a rectangular shape, and an induction coil unit, in which one induction coil among three induction coils has two rectilinear parts, the number of the arch-shaped or rectangular induction coils is not limited thereto.

Further, although the above-mentioned embodiments describe arch-shaped or rectangular induction coils, the shape of the induction coils is not limited thereto but may be variously modified so far as cooking can be rapidly and effectively achieved.

As is apparent from the above description, the embodiments of the present invention provide an electric range and an induction coil unit used therein, which are effectively used under various conditions regardless of size and shape of a cooking container.

Further, the electric range and the induction coil unit used therein operate induction coils, which are adjacent to one another, concurrently, thus being capable of rapidly cooking food in the cooking container.

Although a few embodiments of the invention have been shown and described, it would be appreciated by those skilled in the art that changes may be made in these embodiments without departing from the principles and spirit of the invention, the scope of which is defined in the claims and their equivalents.

## Claims

1. An electric range to receive cooking containers; the electric range comprising:
a plate, on which the cooking containers are mounted;
an induction coil unit provided under the plate, and including a plurality of induction coils; and
a control unit to control an operation of the induction coil unit,
wherein at least one of the induction coils includes at least one rectilinear part.

2. The electric range according to claim 1, wherein at least two of the induction coils include at least one rectilinear part, and the at least two of the induction coils having the rectilinear parts are disposed such that the respective rectilinear parts are adjacent to each other.

3. The electric range according to claim 2, wherein the at least one of the induction coils including the at least one rectilinear part further includes an arched part.

4. The electric range according to claim 3, wherein the at least one of the induction coils having the arched part includes the at least one rectilinear part at one side thereof and the arched part connecting both ends of the at least one rectilinear part at another side thereof.

5. The electric range according to claim 2, wherein the at least one of the induction coils including the at least one rectilinear part has a rectangular shape having four of the rectilinear parts.

6. The electric range according to claim 4, wherein the control unit concurrently operates a plurality of the induction coils that are adjacent to one another.

7. The electric range according to claim 6, wherein the plate includes:
a plurality of main indication lines guiding the cooking containers such that the cooking containers are respectively located on circular ones of the induction coils; and
a plurality of subsidiary indication lines guiding the cooking containers such that the cooking containers are located on the induction coilhaving the rectilinear part .

8. An induction coil unit comprising a plurality of induction coils, wherein at least one of the induction coils includes at least one rectilinear part.

9. The induction coil unit according to claim 8, wherein at least two of the induction coils includes at least one rectilinear part, and the at least two of the coils are disposed such that the rectilinear parts are adjacent to each other.

10. The induction coil unit according to claim 9, wherein the at least one of the induction coils including the at least one rectilinear part further includes an arched part.

11. The induction coil unit according to claim 10, wherein the at least one of the induction coils having the arched part further includes the at least one rectilinear part at one side thereof and the arched part connecting both ends of the at least one rectilinear part at another side thereof.

12. The induction coil unit according to claim 9, wherein the at least one of the induction coils including the at least one rectilinear part has a rectangular shape having four rectilinear parts.

13. The electric range according to claim 5, wherein the control unit concurrently operates a plurality of the induction coils that are adjacent to one another.

14. An electric range to receive a cooking container, the electric range comprising a first induction coil having a rectilinear part.

15. The electric range according to claim 14, further comprising a second induction coil having a rectilinear part, the respective rectilinear parts of the first and second induction coils being opposite each other.
